(19) Europäisches Patentamt / European Patent Office / Office européen des brevets

(11) **EP 1 777 002 B1**

(12) **EUROPEAN PATENT SPECIFICATION**

(45) Date of publication and mention
of the grant of the patent:
**21.08.2013 Bulletin 2013/34**

(51) Int Cl.:
***B01L 3/00*** (2006.01)     ***F04B 19/00*** (2006.01)

(21) Application number: **06121349.2**

(22) Date of filing: **27.09.2006**

(54) **Method for increasing the contact angle change and its speed of a droplet in electrowetting and an apparatus using the droplet formed thereby**

Verfahren zur Erhöhung der Kontaktwinkeländerung und der Geschwindigkeit eines Tropfens und Vorrichtung für seine Benutzung

Méthode pour augmenter le changement de l'angle de contact ainsi que la vitesse d'une goutte en électromuillage et dispositif utilisant la goutte ainsi o

(84) Designated Contracting States:
**DE FR GB**

(30) Priority: **28.09.2005 KR 20050090486**

(43) Date of publication of application:
**25.04.2007 Bulletin 2007/17**

(73) Proprietor: **Samsung Electronics Co., Ltd.
Suwon-si, Gyeonggi-do, 443-742 (KR)**

(72) Inventors:
• **Lee, Jeong Gun
Seoul, 137-771 (KR)**
• **Cho, Hye-Jung
Gyeonggi-do, 431-080 (KR)**
• **Huh, Nam
Seoul, 137-771 (KR)**
• **Kim, Sung Jae
Hyoja-dong, Nam-gu, Pohang-si
Gyeongsangbug-do (KR)**

(74) Representative: **Grünecker, Kinkeldey,
Stockmair & Schwanhäusser
Leopoldstrasse 4
80802 München (DE)**

(56) References cited:
WO-A-2005/047696    WO-A2-2004/012848
US-A1- 2002 043 463    US-A1- 2004 055 536
US-A1- 2004 058 450    US-B1- 6 565 727

**Description**

BACKGROUND OF THE INVENTION

1. Field of The Invention

The present invention relates to a method for controlling a hydrophilic droplet using the principle of electrowetting, and more particularly, to a method for controlling the contact angle of the droplet in electrowetting and an apparatus for controlling the droplet formed by the method.

2. Description of the Related Art

Recently, there has been an increasing interest in a micro total analysis system (μTAS). A type of μTAS, lab-on-a-chip (LOC) has been studied for embodying on one chip all processes such as sampling, pre-treating and reacting the sample, and separating and analyzing the reacted sample.

One issue in the development of such an LOC is the control of a micro flow field for carrying out several processes within the LOC. Among the currently used methods to control the micro flow field in the LOC, are methods that employ a syringe pump, electroosmosis and HPLC (High Performance Liquid Chromatography), or the like, especially to control the transfer of the micro flow field. In this regard, the syringe pump, HPLC, and the like, have disadvantages in that the flow shows a pulsatory form. In addition, the costs are therefore increased. Electroosmosis displays a slow ability to control the flow velocity and requires high voltage.

Meanwhile, surface tension is one of the forces that act on a fluid in the micro flow field. In one method for controlling the flow by using such surface tension, Lippmann proposes electrocapillarity that uses the capillary force change of the electrolyte solution while changing the metal surface by using an externally applied electrostatic charge. However, the flow field control method using such electrocapillarity has drawbacks in that the electricity may flow in the fluid and the surface conditions can be varied by electrochemical reaction brought on by the use of the electricity.

In order to overcome the drawback raised by the electrocapillarity, electrowetting, which controls the hydrophilic droplet by applying an external voltage is used. In electrowetting, the hydrophilic droplet is disposed upon a metal electrode coated with an insulating material, rather than contacting the hydrophilic droplet directly with the metal electrode.

The electrowetting using the surface tension of the hydrophilic droplet can effectively control the flowing of the droplet with a low voltage of several volts using a MEMS (micro electromechanical micro system). A micro electromechanical micro system is simple and economical to fabricate. Further, it is non-destructive and can save the sample for further use and analysis, when compared with other methods that employ flow control after filling a microchannel with a fluid.

U.S. Patent No. 6,565,727 discloses a technique that continuously forms an electrode patch that changes the contact angle of the droplet using a simple electrowetting principle and applies a voltage to the electrode patch through an electric circuit so as to facilitate the distribution, mixing and transportation of the droplet. This patent allows each droplet that overcomes limitations of a consecutive fluid operation method used in the conventional microfluid system to be subjected to a dioxide process, thereby resulting in an operation method of low power and rapid speed.

Based on this patent, there have been developments for microfluid system operation methods using the more improved electrowetting principle applicable for LOC.

Furthermore, a liquid lens attracting public attention in CeBIT 2004 is characterized in that if a voltage is applied to a polar solvent and a nonpolar solvent using the electrowetting phenomenon, a certain curvature is formed on the contact surface between two fluids and thus the focus can be automatically adjusted depending on the distance from the object without the mechanical operation as in the conventional optical lens.

Such liquid lens camera module is similar to the eye lens of human being in that a thickness of the lens is changed automatically depending on the distance from the object to adjust the focus. Since the liquid lens allows for proximate photographing at a distance of 5 cm, it can recognize a fingerprint or character by a cellular phone. Moreover, because it only takes 2/100 second to adjust the focus and the cost of production is about 40% lower than that of the conventional optical lens, the liquid lens is expected as a promising alternative to the optical lens.

Meanwhile, the hydrophilic droplet used in the methods for controlling the droplet using the electrowetting principle hitherto known has a low electrowetting threshold voltage, thereby involving problems that the contact angle change of the droplet is not sufficiently wide and its response time of contact angle change is not so large.

US 2002/0043463 A1, US 2004/0058450 A1 and WO 2005/047696 A1 disclose systems and methods for moving liquid droplets.

**SUMMARY OF THE INVENTION**

Accordingly, the inventors have endeavored to solve the above problems and found that if a specific electrolyte having a certain concentration is added to the hydrophilic droplet in controlling the hydrophilic droplet using the electrowetting principle, the electrowetting threshold voltage increases and thus the contact angle change of the hydrophilic droplet also increases accordingly.

Therefore, the invention provides a method for increasing the change of the contact angle of droplet and its response time in the interface between hydrophobicity and hydrophilicity of the hydrophilic droplet by increasing the electrowetting threshold voltage.

The invention also provides an apparatus for controlling the droplet that is formed with the change of the contact angle. The response time of contact angle change is also increased by the method for increasing the change of the contact angle. This improves the operability of the apparatus to which the electrowetting principle is applied, such as, for example, LOC or liquid lens.

The other advantages of the invention will be understood by the following description and will also be appreciated by the embodiments of the invention more clearly.

Accordingly the present invention provides the subject matter of claims 1 to 16.

## BRIEF DESCRIPTION OF DRAWINGS

The above features of the instant invention will become apparent from the following description of preferred embodiments taken in conjunction with the accompanying drawings, in which:

FIG. 1 is a schematic diagram illustrating a concept for embodying the electrowetting principle;
FIG. 2 is a schematic diagram showing the apparatus using capillary glass tube to perform an experiment for ascertaining the change of the contact angle of the droplet in controlling a droplet using electrowetting in the method of the present invention;
FIG. 3 is a graph showing a threshold voltage measured while changing a concentration of an electrolyte added in Example 1;
FIGs. 4A and 4B are graphs showing a threshold voltage measured while changing a concentration of an electrolyte added in Examples 2-1 and 2-2, respectively;
FIGs. 5A and 5B are graphs showing a threshold voltage measured while changing a concentration of an electrolyte added in Examples 3-1 and 3-2, respectively;
FIG. 6 is a graph showing the effect of $Na_2SO_4$ as the electrolyte added in Examples 1 to 3 in terms of the concentration thereof;
FIG. 7 is a graph showing the simplified measured values of the threshold voltage obtained in Examples, especially for the section I; and
FIG. 8 is a graph showing the simplified measured values of the threshold voltage obtained in Examples, especially for the section II.

## DETAILED DESCRIPTION OF THE INVENTION

The invention now will be described more fully hereinafter with reference to the accompanying drawings, in which embodiments of the invention are shown.

These embodiments are provided so that this disclosure will be thorough and complete, and will fully convey the scope of the invention to those skilled in the art.

The terminology used herein is for the purpose of describing particular embodiments only and is not intended to be limiting of the invention. The terms "a" and "an" do not denote a limitation of quantity, but rather denote the presence of at least one of the referenced item. The term "or" means "and/or". The terms "comprising", "having", "including", and "containing" are to be construed as openended terms (i.e., meaning "including, but not limited to").

To accomplish this, there is provided a method for increasing the change of the contact angle of droplet and its response time in the interface formed by the hydrophilic droplet and the oil or air by adding monovalent electrolyte or divalent electrolyte to the hydrophilic droplet as defined in claim 1. This addition is accomplished in a droplet control method using the electrowetting principle such that the contact angle of the electrowetting is changed if an external voltage is applied to the hydrophilic droplet on the electrode coated with the insulating material.

First, the electrowetting principle used in the present invention will be explained.

The electrowetting is named based on the fact that it can change a surface shape of the droplet depending on the voltage change applied to a thin insulating membrane coated between the metal plate and the droplet. The voltage change permits controlling the surface tension at a low voltage. The voltage change permits the droplet to spread on the metal plate in proportion to the voltage, thereby changing the droplet-insulating interface to change from being non-wetting to being wetting.

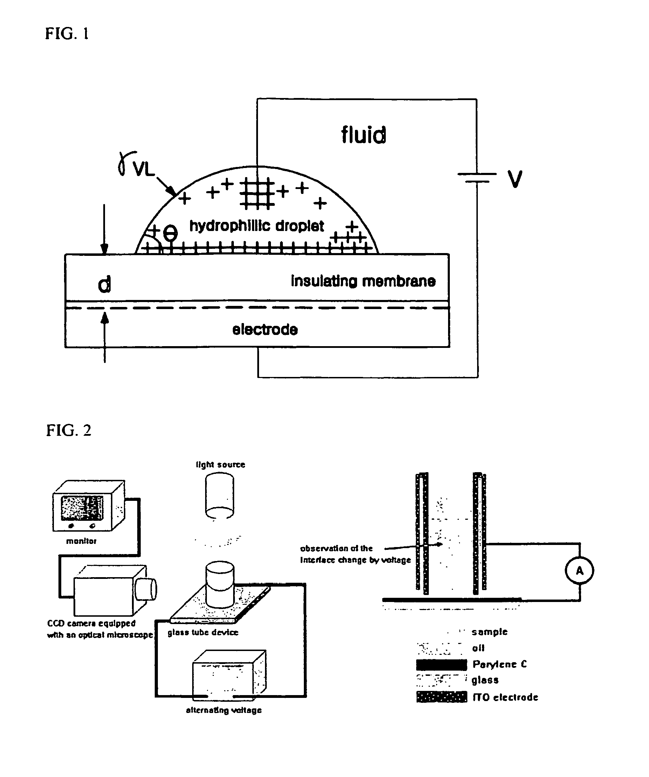

More specifically, the electrowetting means that if the external voltage (V) is applied to the hydrophilic droplet after the hydrophilic droplet is dropped on the electrode coated with the insulating material as shown in FIG. 1, the contact angle ($\theta$) of the droplet is changed.

The contact angle ($\theta$) can be calculated according to the following equation:

$$\cos \theta = \cos \theta_o + \frac{\varepsilon_0 \varepsilon_r V^2}{2 \gamma_{VL} d}$$

wherein $\varepsilon$ is permittivity of the insulating material, $\gamma VL$ is an interfacial tension between the fluid and the droplet, d is a thickness of the insulating membrane, and V is the voltage applied from the outside.

From the above equation, it can be determined that it is preferred that the voltage is higher and the thickness of the insulating membrane is thinner in order to increase the change range of the contact angle. As a result, there is the threshold voltage ($V_C$) where the contact angle is no longer changed. Increasing the voltage further only results in a dielectric breakdown of the insulating membrane.

Therefore, in consideration of the fact that the insulating membrane is of a certain thickness, it is preferable to change the interfacial features of the droplet to enable an increase the applied external voltage. In other words, the threshold voltage of the droplet can be changed to increase the change range of the contact angle rather than minimizing the thickness of the insulating membrane.

The present invention was accomplished by ascertaining the fact that if a monovalent electrolyte or divalent electrolyte is added to the hydrophilic droplet, the threshold voltage of the droplet is considerably increased compared with the threshold voltage prior to the adding of the electrolyte.

Thus, if the hydrophilic droplet includes one or more materials selected from the group consisting of an electrically charged particle, a neutral particle, a biomolecule and a magnetic particle, the interfacial feature of the droplet gets worse. According to the present invention, although such particles are included, the threshold voltage of the droplet can be significantly increased so that it has the interfacial features that permit its use in a LOC. Here, the biomolecule includes at least one material selected from the group consisting of a nucleic acid, a protein, a peptide, a bacterium, a virus and a mammal cell.

Further, the insulating material preferably includes more than one material selected from the group consisting of Parylene C, TEFLON® (polytetrafluoroethylene) and metal oxide membrane; and the electrode preferably includes more than one material selected from the group consisting of indium tin oxide (ITO), Au/Cr (gold/chromium), Al (aluminum) and a conductive polymer.

Examples of metal oxide membranes are silica, alumina, ceria, titania, zirconia, or the like, or a combination comprising at least one of the foregoing metal oxides.

Meanwhile, it is preferable that the monovalent electrolyte used in the present invention is one or more material selected from alkali metal halides including LiCl, KCl and NaCl, and the divalent electrolyte is one or more material selected from alkali metal sulfates or alkali metal nitrates. Examples of such metal sulfates and metal nitrates include $K_2SO_4$ and $Na_2SO_4$. The salts listed above were used in confirming the effect of the present invention because they are compatible with the biomolecules used in LOC and do not facilitate the formation of any precipitates.

At this time, the monovalent electrolyte or divalent electrolyte is preferably added in the concentration of 1 mM to 100 mM, and more preferably 1 mM to 30 mM, as will be explained in Example 1.

Further, if a neutral particle is included in the hydrophilic droplet, the monovalent electrolyte or divalent electrolyte is preferably added in the concentration of 1 mM to 100 mM, and more preferably 10 mM to 30 mM.

In addition, if a particle having a negative charge or positive charge is added to the droplet, the monovalent electrolyte or divalent electrolyte is preferably added in the concentration of 30 mM to 150 mM, and more preferably 30 mM to 100 mM.

The present invention also provides a droplet control apparatus as defined in claim 10 comprising a first non-conductive substrate; a first electrode arranged on an upper side of the first substrate; a second non-conductive substrate arranged opposite to the upper side of the first substrate to form a predetermined space; a second electrode arranged on the surface of the second substrate adjacently to the space, wherein the second electrode is opposed to the first electrode; an insulating membrane positioned between the space and the first electrode or between the space and the second electrode; a hydrophobic membrane positioned between the space and the first electrode or between the space and the second electrode; a hydrophilic droplet located in the space and comprising monovalent electrolyte or divalent electrolyte; and an oil or air located in the space.

The first non-conductive substrate and the second non-conductive substrate can be a plain plate or curved structure without any limitations on their shape, and be made with any non-conductive materials.

Further, the first and the second electrodes, which are arranged opposite to the surfaces of the first substrate and the second substrate in the space formed between the first substrate and the second substrate, are preferably formed to include one or more materials selected from the group consisting of indium tin oxide (ITO), Au/Cr (gold/chromium), Al (aluminum) and a conductive polymer. Examples of conductive polymers are polyacetylene, polypyrrole, polyaniline, polythiophene, or the like, or a combination comprising at least one of the foregoing conductive polymers.

Also, the insulating membrane is preferably formed to include one or more materials selected from the group consisting of Parylene C, TEFLON® and metal oxide. The hydrophobic membrane can be made with any materials having the hydrophobicity.

Therefore, the droplet control apparatus of the present invention is made in such a manner that the insulating membrane is formed only on either the first electrode or the second electrode. Thus, the voltage is applied to the hydrophilic droplet including monovalent electrolyte or divalent electrolyte positioned in the space and the droplet is controlled by the applied external voltage. At this time, the threshold voltage of the droplet is increased to increase the change of the contact angle as well as its response time of contact angle change of the droplet in the interface formed between the droplet and the oil or air, thereby controlling the droplet more precisely.

Further, in case of LOC (lab-on-a-chip) to which the droplet control apparatus of the present invention is applied, the droplet can move electrically under the voltage of 50 V to 140 V and such movement is accomplished in such a way that the electrowetting is induced by applying electricity only to the interface of the droplet in the direction where the movement is desired. As such, if the droplet control apparatus of the present invention is utilized in the micro flow field transport of LOC, it is possible to obtain quicker movement than the transport obtained when using a conventional droplet.

Therefore, in a LOC, a sample containing a biomolecule to be experimented with or analyzed can be transported to a desired position through the droplet by using the electric field. Here, since the electrical current does not flow, the LOC does not cause power consumption and has little influence on the biomolecule contained in the sample.

The droplet having the increased change of the contact angle and its response time of contact angle change and the apparatus for controlling such droplet can also be used in the formation, manipulation and control of a liquid lens. The liquid lens controls the thickness and focal distance of the lens (the boundary surface or interface with non-conductive oily liquid) by raising or lowering the voltage that is applied to the electrolyte solution filled in the airtight space using the electrowetting principle. Thus, such liquid lens is known to have an advantage in that it can adjust a refractive index by itself like the eye lens, which is favorable to miniaturization and makes the cost of production inexpensive.

The droplet can be controlled more easily, and thus, the operation properties of the liquid lens can be improved significantly.

Hereinafter, the present invention will be described in detail with reference to the following examples. These examples are provided to illustrate the present invention.

**Comparative Example 1**

An apparatus using a capillary glass tube for carrying out the experiment for confirming the contact angle change of the droplet shown in FIG. 2 was used to observe the contact angle change of the droplet used in the droplet control method by the electrowetting principle. The apparatus is comprised of a glass tube device, a power supply, a computer, a CCD camera equipped with an optical microscope, and a light source.

In the glass tube device, an ITO thin film was deposited on the glass plate to install the electrode. Thereafter, the ITO thin film was deposited on the ITO electrode as shown in FIG. 2. Here, an insulating membrane was formed on the ITO electrode of the inner surface of the glass tube. The insulating membrane has an excellent optical transparency and biocompatibility and is formed by coating the hydrophobic Parylene C (contact angle: ~104°) in the thickness of 2.5 $\mu$m on the ITO electrode by using chemical deposition.

PBS (1 mM sodium phosphate, 15 mM NaCl, pH 7.4) was dropped to the glass tube of the glass tube device as configured above by using a micropipette. Thereafter, the alternating voltage less than 1 kHz/140 V was applied from the power supply and then the contact angle change of the PBS droplet was observed to find the threshold voltage at which the dielectric breakdown of the insulating membrane occurs. At this time, the contact angle change of the PBS droplet according to the voltage change was photographed by the CCD camera and the images photographed by the camera were stored as image files by using A/D board, image board and software installed in the computer.

The bubbles were observed in the PBS droplet, the bubbles being caused by electrolysis due to the dielectric breakdown of the insulating membrane at 60V, which means that the threshold voltage of the droplet is 60V.

**Comparative Example 2-1**

The contact angle change was observed by conducting an experiment in the same method as Comparative Example 1 except that *E. coli* of a cylinder form ranging from 1 $\mu$m to 3 $\mu$m (that is weak hydrophobic but miscible with water, and is considered as an almost neutral particle though it has a very weak negative charge) was further included in the PBS. It can be found that the bubbles caused by electrolysis due to the dielectric breakdown of the insulating membrane at 54V were observed in the PBS droplet comprising *E. coli,* which means that the threshold voltage of the PBS droplet comprising *E. coli* is 54V.

**Comparative Example 2-2**

The contact angle change was observed by conducting an experiment in the same method as Comparative Example 1 except that 2% v/v of a polystyrene (PS) bead of 4.16 $\mu$m (that is hydrophobic but miscible with water, and is considered as an almost neutral particle though it has a very weak negative charge) was further included in the PBS. It can be seen that the bubbles caused by electrolysis due to the dielectric breakdown of the insulating membrane at 54V were observed in the PBS droplet comprising the PS bead, which means that the threshold voltage of the PBS droplet comprising the PS bead is 54V.

**Comparative Example 3-1**

The contact angle change was observed by conducting an experiment in the same method as Comparative Example 1 except that 2% v/v of a magnetic bead (COOH bead) terminated with the carboxylic acid group of 1.05 $\mu$m (that has a hydrophilic surface and a negative charge) was further included in the PBS. It can be found that the bubbles caused by electrolysis due to the dielectric breakdown of the insulating membrane at 58V were observed in the PBS droplet comprising the COOH bead, which means that the threshold voltage of the PBS droplet comprising the COOH bead is 58V.

**Comparative Example 3-2**

The contact angle change was observed by conducting an experiment in the same method as Comparative Example 1 except that 2% v/v of a magnetic bead ($NH^{2+}$ bead) terminated with the amine group of 1.5 $\mu$m (that has a hydrophilic surface and a positive charge) was further included in the PBS. It can be confirmed that the bubbles caused by electrolysis due to the dielectric breakdown of the insulating membrane at 53V were observed in the PBS droplet comprising the $NH^{2+}$ bead, which means that the threshold voltage of the PBS droplet comprising the $NH^{2+}$ bead is 53V.

From these experimental results, it was noticed that the threshold voltage of the droplet (the PBS droplet) is 60V, and if the droplet further comprises either a neutral particle, a negative charge particle, a positive charge particle, or the like, the droplet shows the lower threshold voltage than that of the PBS droplet. Therefore, it can be recognized that there is a need for a novel method that is capable of increasing the range of the contact angle change by raising the threshold voltage.

**Example 1-1**

The contact angle change of the PBS droplet was observed by conducting an experiment in the same method as Comparative Example 1 except that 1 mM of $Na_2SO_4$ was further included in the PBS in order to find the threshold voltage at which the dielectric breakdown of the insulating membrane occurs. The bubbles caused by electrolysis due to the dielectric breakdown of the insulating membrane at 85V were observed in the PBS droplet comprising $Na_2SO_4$. It is therefore determined that the threshold voltage of the PBS droplet comprising $Na_2SO_4$ is 85V.

**Example 1-2**

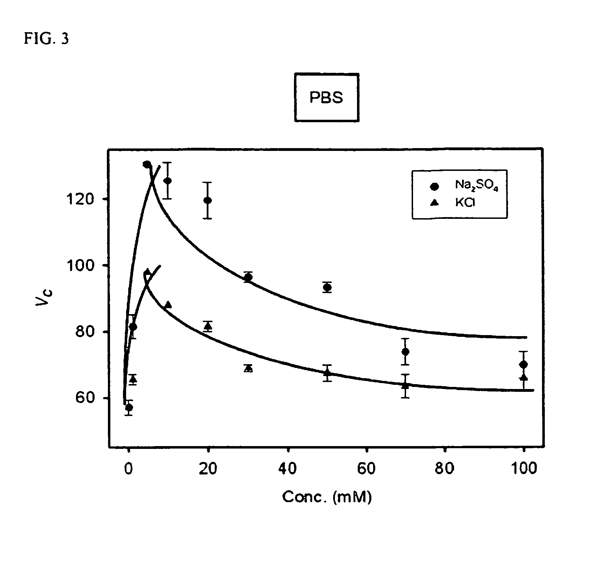

The contact angle change of the PBS droplet was observed by conducting an experiment in the same method as Comparative Example 1 except that 10 mM of $Na_2SO_4$ was further included in the PBS in order to find the threshold voltage at which the dielectric breakdown of the insulating membrane occurs. The bubbles caused by electrolysis due to the dielectric breakdown of the insulating membrane at 110V were observed in the PBS droplet comprising $Na_2SO_4$, therefore, it can be noted that the threshold voltage gets increased as $Na_2SO_4$ is added (see FIG. 3).

**Example 1-3**

The contact angle change of the PBS droplet was observed by conducting an experiment in the same method as Comparative Example 1 except that 1 mM of KCl was further included in the PBS in order to find the threshold voltage at which the dielectric breakdown of the insulating membrane occurs. It can be seen that the bubbles caused by electrolysis due to the dielectric breakdown of the insulating membrane at 65V were observed in the PBS droplet comprising 1 mM of KCl, which means that the threshold voltage is 65V.

**Example 1-4**

The contact angle change of the PBS droplet was observed by conducting an experiment in the same method as Comparative Example 1 except that 10 mM of KCl was further included in the PBS in order to find the threshold voltage at which the dielectric breakdown of the insulating membrane occurs. It can be found that the bubbles caused by electrolysis due to the dielectric breakdown of the insulating membrane at 90V were observed in the PBS droplet comprising 10 mM of KCl, which means that the threshold voltage of the PBS droplet comprising KCl is 90V.

Therefore, it can be noted that the threshold voltage is increased as the concentration of KCl is increased (see FIG. 3).

Based on Example 1, it can be seen that if the droplet further comprises the monovalent electrolyte or divalent electrolyte, the droplet shows significantly greater threshold voltage than that obtained in Comparative Example 1, that is, 60V.

**Example 2-1**

The contact angle change of the PBS droplet was observed by conducting an experiment in the same method as Comparative Example 2-1 except that 10 mM of $Na_2SO_4$ was further included in the PBS. The bubbles caused by electrolysis due to the dielectric breakdown of the insulating membrane at 91V were observed in the PBS droplet comprising $Na_2SO_4$. Therefore, although the PBS droplet comprising *E. coli* shows the threshold voltage of 54V, it can be noted that if 10 mM of $Na_2SO_4$ was further included in the PBS droplet comprising *E. coli,* the droplet has the noticeably increased threshold voltage of 91V.

**Example 2-2**

The contact angle change of the PBS droplet was observed by conducting an experiment in the same method as Comparative Example 2-2 except that 10 mM of $Na_2SO_4$ was further included in the PBS. The bubbles caused by electrolysis due to the dielectric breakdown of the insulating membrane at 79V were observed in the PBS droplet comprising $Na_2SO_4$. Therefore, although the PBS droplet comprising PS bead shows the threshold voltage of 54V, it can be noted that if 10 mM of $Na_2SO_4$ was further included in the PBS droplet comprising the PS bead, the droplet has the noticeably increased threshold voltage of 79V.

From the results of Example 2, it can be noted that if the PBS droplet including the neutral particle further comprises the divalent electrolyte, the droplet shows a significantly greater threshold voltage than 54V obtained in Comparative Example 2-1 and 54V obtained in Comparative Example 2-2.

**Example 3-1**

The contact angle change of the PBS droplet was observed by conducting an experiment in the same method as Comparative Example 3-1 except that 10 mM of $Na_2SO_4$ was further included in the PBS. The bubbles caused by electrolysis due to the dielectric breakdown of the insulating membrane at 105V were observed in the PBS droplet comprising $Na_2SO_4$. Therefore, although the PBS droplet comprising the COOH bead shows the threshold voltage of 58V, it can be noted that if 10 mM of $Na_2SO_4$ was further included in the PBS droplet comprising the COOH bead, the droplet has the noticeably increased threshold voltage of 105V.

**Example 3-2**

The contact angle change of the PBS droplet was observed by conducting an experiment in the same method as Comparative Example 3-2 except that 10 mM of $Na_2SO_4$ was further included in the PBS. The bubbles caused by electrolysis due to the dielectric breakdown of the insulating membrane at 78V were observed in the PBS droplet comprising $Na_2SO_4$. Therefore, although the PBS droplet comprising the $NH^{2+}$ bead shows the threshold voltage of 53V, it can be noted that if 10 mM of $Na_2SO_4$ was further included in the PBS droplet comprising the $NH^{2+}$ bead, the droplet has the noticeably increased threshold voltage of 78V.

As seen from the results of Example 3, if the PBS droplet including the particle having the negative charge or positive charge further comprises the divalent electrolyte, the droplet shows a significantly greater threshold voltage than 58V obtained in Comparative Example 3-1 and 53V obtained in Comparative Example 3-2.

With reference to FIG. 3 which depicts the threshold voltage measured while changing the concentration of the electrolyte added in Example 1, it can be recognized that the added monovalent electrolyte or divalent electrolyte increases the threshold voltage effectively in the concentration range of 1 mM to 100 mM, especially 1 mM to 30 mM.

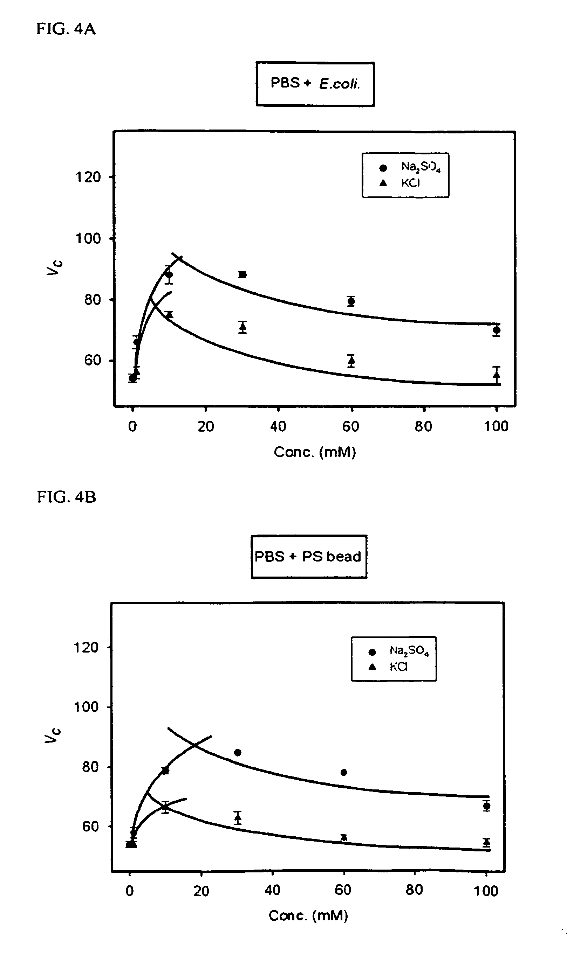

With reference to FIGs. 4A and 4B which depicts the threshold voltage measured while changing the concentration of the electrolyte added in Example 2 as graphs, it can be noted that if the neutral particle is included in the droplet, the monovalent electrolyte or divalent electrolyte increases the threshold voltage effectively in the concentration range of 1 mM to 100 mM, especially of 1 mM to 30 mM.

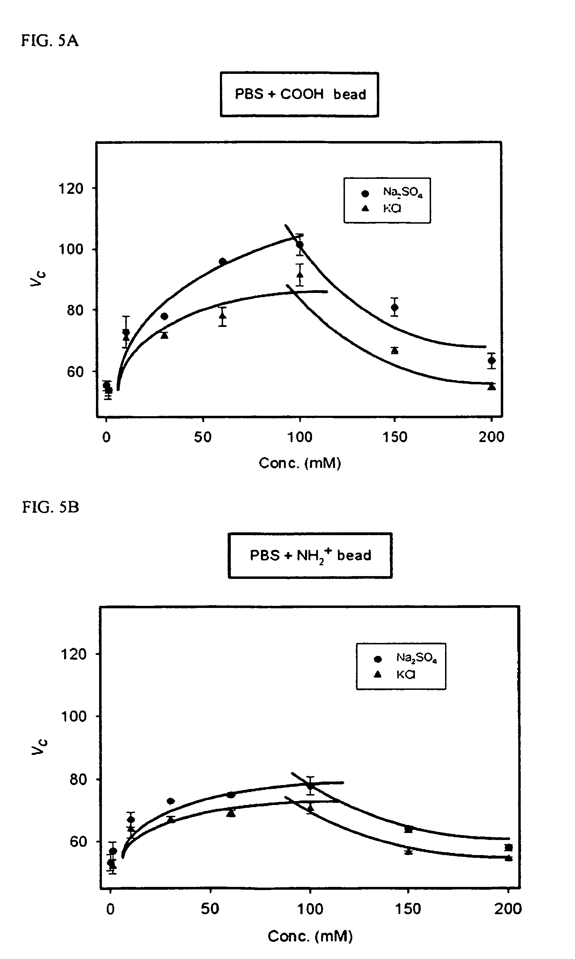

In FIGs. 5A and 5B showing the threshold voltage measured by changing the concentration of the electrolyte added in Example 3, it can be noted that if the particle having the negative charge or positive charge is included in the droplet, the monovalent electrolyte or divalent electrolyte increases the threshold voltage effectively in the concentration range of 30 mM to 150 mM, especially 30 mM to 100 mM.

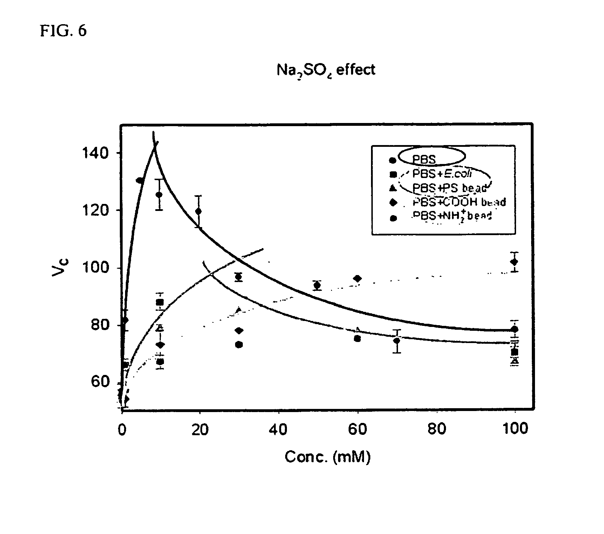

These results can be understood more clearly by referring to FIG. 6 unifiably showing the effect of $Na_2SO_4$ depending on the concentration change thereof in Examples 1 to 3.

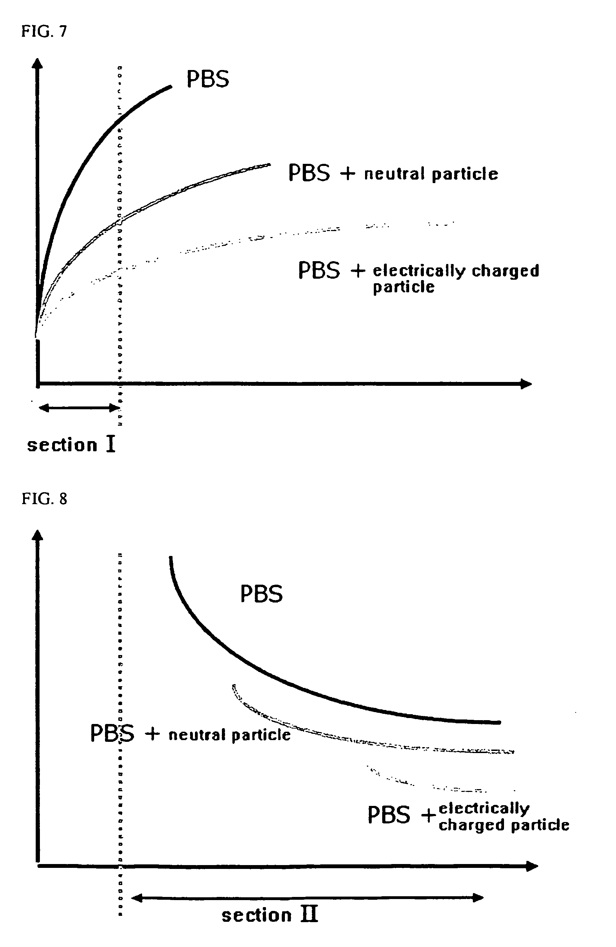

Meanwhile, the effect of the added electrolyte can be appreciated more clearly by referring to FIGs. 7 and 8 showing the simplified measured values of the threshold voltage obtained in Examples. The effect of the added electrolyte may be assessed in two sections phenomenologically. Section I is a section where the threshold voltage increases in proportion to the concentration of the added electrolyte, and section II is a section where the threshold voltage decreases rather than increases although the concentration of the added electrolyte increases.

In section I, the contact angle in electrowetting is changed because the electric conductivity of the total mixed electrolyte liquid is increased by the added electrolyte to thereby induce the further transport of the applied electric charge to the interface where the droplet contacts the insulating membrane. Such phenomenon actively develops as the concentration of the added electrolyte increases, thereby resulting in the increase of the threshold voltage in electrowetting.

The phenomenon, however, is altered if the electrolyte is added in the concentration above a certain concentration. As in section II, when the movement of the electric charge, (that is, an increase of the kinetic energy of the electric charge) by the high concentration of the electrolyte ion goes beyond the limit of surface energy, (which can lead to the contact angle change in the interface) the electrowetting phenomenon no longer takes place and the excessive kinetic energy functions to induce the dielectric breakdown of the insulating membrane. Consequently, in section II, the threshold voltage of electrowetting decreases rather than increases as the concentration of the added electrolyte increases.

The effect by addition of the particle in section I shown in FIG. 7 slows down the increasing effect of the threshold voltage as the concentration of the added electrolyte is increased beyond a certain point in the electrolyte droplet. As the neutral particle is included in the droplet, the droplet influences the surface condition at the interface where the droplet contacts the insulating membrane. This changes the surface energy that induces the electrowetting phenomenon. This change plays a role in inhibiting the threshold voltage increase caused by addition of the electrolyte. Furthermore, if the particle having the negative charge or positive charge exists in the droplet, +/- functional groups activated on the surface of the particle are ion-adsorbed to the added electrolyte ion. Thus, the additional transport effect of the electric charge by addition of the electrolyte is slowed down, thereby further decreasing the effect of increasing the threshold voltage.

The effect by addition of the particle in section II as shown in FIG. 8 has a smaller fluctuation unlike section I. This is because the effect of the excessive kinetic energy, by addition of the high concentration of the electrolyte, to induce the dielectric breakdown of the insulating membrane, works better than the effect of the particle addition.

According to the present invention as explained above, it is possible to increase the electrowetting threshold voltage, thereby promoting an enhancement of the change of the contact angle and its response time of contact angle change in the interface between hydrophobicity and hydrophilicity of the hydrophilic droplet. Further, the present invention allows for the development of droplet control apparatus. Therefore, according to the droplet and the droplet control apparatus of the invention, it is possible to more improve the operationability of the apparatus to which the electrowetting principle is applied, like LOC, liquid lens or the like.

## Claims

1. A method for increasing the change of the contact angle in the interface formed between hydrophobicity and hydrophilicity of a hydrophilic droplet and the response time of the change of the contact angle comprising:

   adding a monovalent electrolyte or a divalent electrolyte to the hydrophilic droplet;
   disposing the hydrophilic droplet on an insulating surface of an electrode surrounded with an oil or air, wherein an interface is formed between the hydrophilic droplet and the oil or air; the hydrophilic droplet being a 1mM sodium phosphate, 15mM NaCl, pH 7.4 PBS droplet; and
   applying an external voltage to the electrode, wherein the monovalent electrolyte or divalent electrolyte is added either in the concentration of 1mM to 100mM or, if the hydrophilic droplet includes one or more materials selected from the group of an electrically charged particle, a neutral particle, a biomolecule and a magnetic particle, and if said material has a negative or a positive charge, the monovalent electrolyte or divalent electrolyte is added in a concentration of 30mM to 150mM.

2. The method according to claim 1, wherein the hydrophilic droplet includes one or more materials selected from the group consisting of an electrically charged particle, a neutral particle, a biomolecule and a magnetic particle.

3. The method according to claim 2, wherein the biomolecule includes one or more materials selected from the group consisting of a nucleic acid, a protein, a peptide, a bacterium, a virus and a mammal cell.

4. The method according to claim 1, wherein the insulating surface includes one or more materials selected from the group consisting of Parylene C, polytetrafluoroethylene and metal oxide.

5. The method according to claim 1, wherein the electrode includes one or more materials selected from the group consisting of Indium Tin Oxide (ITO), Au/Cr, Al and a conductive polymer.

6. The method according to claim 1, wherein the monovalent electrolyte is alkali metal halide, and the divalent electrolyte is an alkali metal sulfate or an alkali metal nitrate.

7. The method according to claim 1, wherein the monovalent electrolyte or divalent electrolyte is added in the concentration of 1 mM to 30mM.

8. The method according to claim 2, wherein if the material added in the droplet is neutral, the monovalent electrolyte or divalent electrolyte is added in the concentration of 1 mM to 100mM.

9. The method according to claim 8, wherein if the material added in the droplet is neutral, the monovalent electrolyte or divalent electrolyte is added in the concentration of 10mM to 30mM.

10. A droplet control apparatus comprising
    a first non-conductive substrate;
    a first electrode arranged on an upper side of the first substrate;
    a second non-conductive substrate, arranged opposite the upper side of the first substrate, for forming a predetermined space;
    a second electrode arranged on the surface of the second substrate adjacently to the space and opposite to the upper side of the first substrate;
    an insulating membrane positioned between the space and the first electrode or between the space and the second electrode;
    a hydrophobic membrane positioned between the space and the first electrode or between the space and the second electrode;
    a hydrophilic droplet located in the space and comprising monovalent electrolyte or divalent electrolyte;
    the hydrophilic droplet being a 1 mM sodium phosphate, 15mM NaCl, pH 7.4 PBS droplet; and

an oil or air located in the space,
wherein the monovalent electrolyte or divalent electrolyte is added either in a concentration of 1mM to 100mM or, if the hydrophilic droplet includes one or more materials selected from the group of an electrically charged particle, a neutral particle, a biomolecule and a magnetic particle, and if said material has a negative or a positive charge, the monovalent electrolyte or divalent electrolyte is added in a concentration of 30mM to 150mM.

11. The droplet control apparatus according to claim 10, wherein the hydrophilic droplet includes one or more materials selected from the group consisting of an electrically charged particle, a neutral particle, a biomolecule and a magnetic particle.

12. The droplet control apparatus according to claim 11, wherein the biomolecule includes one or more materials selected from the group consisting of a nucleic acid, a protein, a peptide, a bacterium, a virus and a mammal cell.

13. The droplet control apparatus according to claim 10, wherein the monovalent electrolyte is alkali metal halide, and the divalent electrolyte is alkali metal sulfate or alkali metal nitrate.

14. The droplet control apparatus according to claim 10, wherein the monovalent electrolyte or divalent electrolyte is added in the concentration of 1 mM to 30mM.

15. The droplet control apparatus according to claim 11, wherein if the material added in the droplet is neutral, the monovalent electrolyte or divalent electrolyte is added in the concentration of 1mM to 100mM.

16. The droplet control apparatus according to claim 15, wherein if the material added in the droplet is neutral, the monovalent electrolyte or divalent electrolyte is added in the concentration of 10mM to 30mM.

**Patentansprüche**

1. Verfahren zum Erhöhen der Änderung des Kontaktwinkels an der Grenzfläche, die zwischen Hydrophobie und Hydrophilie eines hydrophilen Tröpfchens gebildet wird, und der Ansprechzeit der Änderung des Kontaktwinkels, umfassend:

   Zugeben eines monovalenten Elektrolyts oder eines divalenten Elektrolyts zum hydrophilen Tröpfchen;
   Anordnen des hydrophilen Tröpfchens auf eine isolierende Oberfläche einer Elektrode, die mit Öl oder Luft umgeben ist, wobei eine Grenzfläche zwischen dem hydrophilen Tröpfchen und dem Öl oder der Luft gebildet wird; und
Anlegen einer externen Spannung an die Elektrode,
wobei der monovalente Elektrolyt oder divalente Elektrolyt entweder in einer Konzentration von 1 mM bis 100 mM zugegeben wird oder, wenn das hydrophile Tröpfchen ein oder mehrere Materialien beinhaltet, die ausgewählt sind aus der Gruppe aus einem elektrisch geladenen Teilchen, einem neutralen Teilchen, einem Biomolekül und einem magnetischen Partikel, und wenn besagtes Material eine negative oder eine positive Ladung besitzt, der monovalente Elektrolyt oder divalente Elektrolyt in einer Konzentration von 30 mM bis 150 mM zugegeben wird.

2. Verfahren gemäß Anspruch 1, wobei das hydrophile Tröpfchen ein oder mehrere Materialien beinhaltet, die ausgewählt sind aus der Gruppe, bestehend aus einem elektrisch geladenen Partikel, einem neutralen Partikel, einem Biomolekül und einem magnetischen Partikel.

3. Verfahren gemäß Anspruch 2, wobei das Biomolekül ein oder mehrere Materialien beinhaltet, die ausgewählt sind aus der Gruppe, bestehend aus einer Nukleinsäure, einem Protein, einem Peptid, einem Bakterium, einem Virus und einer Säugetierzelle.

4. Verfahren gemäß Anspruch 1, wobei die isolierende Oberfläche ein oder mehrere Materialien beinhaltet, die ausgewählt sind aus der Gruppe, bestehend aus Parylen C, Polytetrafluorethylen und Metalloxid.

5. Verfahren gemäß Anspruch 1, wobei die Elektrode ein oder mehrere Materialien beinhaltet, die ausgewählt sind aus der Gruppe, bestehend aus Indiumzinnoxid (ITO), Au/Cr, Al und einem leitfähigen Polymer.

6. Verfahren gemäß Anspruch 1, wobei der monovalente Elektrolyt ein Alkalimetallhalogenid, und der divalente Elektrolyt ein Alkalimetallsulfat oder ein Alkalimetallnitrat ist.

7. Verfahren gemäß Anspruch 1, wobei der monovalente Elektrolyt oder divalente Elektrolyt in der Konzentration von 1 mM bis 30 mM zugegeben wird.

8. Verfahren gemäß Anspruch 2, wobei, wenn das Material, das in das Tröpfchen gegeben wird, neutral ist, der monovalente Elektrolyt oder divalente Elektrolyt in der Konzentration von 1 mM bis 100 mM zugegeben wird.

9. Verfahren gemäß Anspruch 8, wobei, wenn das Material, das in das Tröpfchen gegeben wird, neutral ist, der monovalente Elektrolyt oder divalente Elektrolyt in der Konzentration von 10 mM bis 30 mM zugegeben wird.

10. Vorrichtung zum Kontrollieren von Tröpfchen, umfassend:

ein erstes, nichtleitfähiges Substrat;
eine erste Elektrode, die an einer oberen Seite des ersten Substrats angeordnet ist;
ein zweites, nichtleitfähiges Substrat, das gegenüber der oberen Seite des ersten Substrats zum Bilden eines vorbestimmten Raums angeordnet ist;
eine zweite Elektrode, die auf der Oberfläche des zweiten Substrats angrenzend zu dem Raum und gegenüber zu der oberen Seite des ersten Substrats angeordnet ist;
eine isolierende Membran, die zwischen dem Raum und der ersten Elektrode, oder zwischen dem Raum und der zweiten Elektrode positioniert ist;
eine hydrophobe Membran, die zwischen dem Raum und der ersten Elektrode, oder zwischen dem Raum und der zweiten Elektrode positioniert ist;
ein hydrophiles Tröpfchen, das sich in dem Raum befindet und monovalenten Elektrolyt oder
divalenten Elektrolyt umfasst; und
ein Öl oder Luft, das/die sich in dem Raum befindet,
wobei der monovalente Elektrolyt oder divalente Elektrolyt entweder in einer Konzentration von 1 mM bis 100 mM zugegeben wird oder, wenn das hydrophile Tröpfchen ein oder mehrere Materialien beinhaltet, die ausgewählt sind aus der Gruppe aus einem elektrisch geladenen Teilchen, einem neutralen Teilchen, einem Biomolekül und einem magnetischen Partikel, und wenn besagtes Material eine negative oder eine positive Ladung besitzt, der monovalente Elektrolyt oder divalente Elektrolyt in einer Konzentration von 30 mM bis 150 mM zugegeben wird.

11. Vorrichtung zum Kontrollieren eines Tröpfchens gemäß Anspruch 10, wobei das hydrophile Tröpfchen ein oder mehrere Materialien beinhalt, die ausgewählt sind aus der Gruppe, bestehend aus einem elektrisch geladenen Partikel, einem neutralen Partikel, einem Biomolekül und einem magnetischen Partikel.

12. Vorrichtung zum Kontrollieren eines Tröpfchens gemäß Anspruch 11, wobei das Biomolekül ein oder mehrere Materialien beinhaltet, die ausgewählt sind aus der Gruppe, bestehend aus einer Nukleinsäure, einem Protein, einem Peptid, einem Bakterium, einem Virus und einer Säugetierzelle.

13. Vorrichtung zum Kontrollieren von Tröpfchen gemäß Anspruch 10, wobei der monovalente Elektrolyt ein Alkalimetallhalogenid, und der divalente Elektrolyt ein Alkalimetallsulfat oder ein Alkalimetallnitrat ist.

14. Vorrichtung zum Kontrollieren von Tröpfchen gemäß Anspruch 10, wobei der monovalente Elektrolyt oder divalente Elektrolyt in der Konzentration von 1 mM bis 30 mM zugegeben ist.

15. Vorrichtung zum Kontrollieren von Tröpfchen gemäß Anspruch 11, wobei der monovalente Elektrolyt oder divalente Elektrolyt in der Konzentration von 1 mM bis 100 mM zugegeben ist.

16. Vorrichtung zum Kontrollieren von Tröpfchen gemäß Anspruch 15, wobei, wenn das Material, das in das Tröpfchen gegeben ist, neutral ist, der monovalente Elektrolyt oder divalente Elektrolyt in der Konzentration von 10 mM bis 30 mM zugegeben ist.

**Revendications**

1. Procédé pour augmenter le changement de l'angle de contact dans l'interface formée entre une hydrophobie et une hydrophilie d'une gouttelette hydrophile et le temps de réponse du changement de l'angle de contact, comprenant les étapes consistant à :

- ajouter un électrolyte monovalent ou un électrolyte divalent à la gouttelette hydrophile ;
- disposer la gouttelette hydrophile sur une surface isolante d'une électrode entourée par une huile ou de l'air, grâce à quoi une interface est formée entre la gouttelette hydrophile et l'huile ou l'air, et appliquer une tension externe à l'électrode ,
- pour lequel l'électrolyte monovalent ou l'électrolyte divalent est ajouté, soit à une concentration de 1 mM à 100 mM, soit, si la gouttelette hydrophile inclut une ou plusieurs substances sélectionnées parmi le groupe constitué par une particule électriquement chargée, une particule neutre, une biomolécule et une particule magnétique, et si ladite substance a une charge négative ou positive, l'électrolyte monovalent ou l'électrolyte divalent est ajouté à une concentration de 30 mM à 150 mM.

2. Procédé selon la revendication 1, pour lequel la gouttelette hydrophile inclut une ou plusieurs substances sélectionnées parmi le groupe constitué par une particule électriquement chargée, une particule neutre, une biomolécule et une particule magnétique.

**3.** Procédé selon la revendication 2, pour lequel la biomolécule inclut une ou plusieurs substances sélectionnées parmi le groupe constitué par un acide nucléique, une protéine, un peptide, une bactérie, un virus et une cellule de mammifère.

**4.** Procédé selon la revendication 1, pour lequel la surface isolante inclut une ou plusieurs substances sélectionnées parmi le groupe constitué par un parylène C, un polytétrafluoréthylène et un oxyde de métal.

**5.** Procédé selon la revendication 1, pour lequel l'électrode inclut une ou plusieurs substances sélectionnées parmi le groupe constitué par un oxyde d'étain et d'indium (ITO), un Au/Cr, un Al et un polymère conducteur.

**6.** Procédé selon la revendication 1, pour lequel l'électrolyte monovalent est un halogénure d'un métal alcalin et l'électrolyte divalent est un sulfate d'un métal alcalin ou un nitrate d'un métal alcalin.

**7.** Procédé selon la revendication 1, pour lequel l'électrolyte monovalent ou l'électrolyte divalent est ajouté à une concentration de 1 mM à 30 mM.

**8.** Procédé selon la revendication 2, pour lequel, si la substance ajoutée à la gouttelette est neutre, l'électrolyte monovalent ou l'électrolyte divalent est ajouté à une concentration de 1 mM à 100 mM.

**9.** Procédé selon la revendication 8, pour lequel, si la substance ajoutée à la gouttelette est neutre, l'électrolyte monovalent ou l'électrolyte divalent est ajouté à une concentration de 10 mM à 30 mM.

**10.** Appareil de commande de gouttelette, comprenant :

- un premier substrat non-conducteur ;
- une première électrode disposée sur une face supérieure du premier substrat ;
- un second substrat non-conducteur, disposé pour faire face à la face supérieure du premier substrat, pour former un espace prédéterminé ;
- une seconde électrode disposée sur la surface du second substrat, de façon adjacente à l'espace et faisant face à la face supérieure du premier substrat ;
- une membrane isolante disposée entre l'espace et la première électrode ou entre l'espace et la seconde électrode ;
- une membrane hydrophobe disposée entre l'espace et la première électrode ou entre l'espace et la seconde électrode ;
- une gouttelette hydrophile disposée dans l'espace et comprenant un électrolyte monovalent ou un électrolyte divalent ; et
- une huile ou de l'air situé dans l'espace,

- dans lequel l'électrolyte monovalent ou l'électrolyte divalent est ajouté, soit à une concentration de 1 mM à 100 mM, soit, si la gouttelette hydrophile inclut une ou plusieurs substances sélectionnées parmi le groupe constitué par une particule électriquement chargée, une particule neutre, une biomolécule et une particule magnétique, et si ladite substance a une charge négative ou positive, l'électrolyte monovalent ou l'électrolyte divalent est ajouté à une concentration de 30 mM à 150 mM.

**11.** Appareil de commande de gouttelette selon la revendication 10, dans lequel la gouttelette hydrophile inclut une ou plusieurs substances sélectionnées parmi le groupe constitué par une particule électriquement chargée, une particule neutre, une biomolécule et une particule magnétique.

**12.** Appareil de commande de gouttelette selon la revendication 11, dans lequel la biomolécule inclut une ou plusieurs substances sélectionnées parmi le groupe constitué par un acide nucléique, une protéine, un peptide, une bactérie, un virus et une cellule de mammifère.

**13.** Appareil de commande de gouttelette selon la revendication 10, dans lequel l'électrolyte monovalent est un halogénure d'un métal alcalin et l'électrolyte divalent est un sulfate d'un métal alcalin ou un nitrate d'un métal alcalin.

**14.** Appareil de commande de gouttelette selon la revendication 10, dans lequel l'électrolyte monovalent ou l'électrolyte divalent est ajouté à une concentration de 1 mM à 30 mM.

**15.** Appareil de commande de gouttelette selon la revendication 11, dans lequel l'électrolyte monovalent ou l'électrolyte divalent est ajouté à une concentration de 1 mM à 100 mM.

**16.** Appareil de commande de gouttelette selon la revendication 15, dans lequel, si la substance ajoutée à la gouttelette est neutre, l'électrolyte monovalent ou l'électrolyte divalent est ajouté à une concentration de 10 mM à 30 mM.

FIG. 1

FIG. 2

FIG. 3

FIG. 4A

PBS + *E.coli.*

FIG. 4B

PBS + PS bead

FIG. 5A

PBS + COOH bead

FIG. 5B

PBS + NH$_2^+$ bead

FIG. 6

Na$_2$SO$_4$ effect

FIG. 7

section I

FIG. 8

section II

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6565727 B
- US 20020043463 A1
- US 20040058450 A1
- WO 2005047696 A1